(19) Europäisches Patentamt / European Patent Office / Office européen des brevets

(11) **EP 4 498 297 A1**

(12) **EUROPEAN PATENT APPLICATION**

(43) Date of publication:
**29.01.2025 Bulletin 2025/05**

(21) Application number: **23187428.0**

(22) Date of filing: **25.07.2023**

(51) International Patent Classification (IPC):
**G06Q 10/04** (2023.01)     **G06Q 10/063** (2023.01)
**G06Q 50/06** (2024.01)

(52) Cooperative Patent Classification (CPC):
**G06Q 10/04; G06Q 10/063; G06Q 50/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Gamesa Renewable Energy A/S**
**7330 Brande (DK)**

(72) Inventor: **Hawkins, Samuel**
**7100 Vejle (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **REVENUE BASED OPTIMIZATION OF WIND FARM SPATIAL LAYOUT**

(57)     The present invention relates to a method to define a spatial arrangement of wind turbines (10) in a wind farm at least including a revenue parameter based on a value function being a forecast of the relationship between electricity prices and wind speeds, the method including
- a step (1000) to define one or multiple site data positions (200) at the wind farm,
- a step (1030), for each site data position (200), use a forecast model to determine the value function relating wind speed to an electricity value; and
- a step (1100) to optimize the layout by adjusting the wind turbine positions and recalculating the overall revenue in order to obtain the wind turbine positions that collectively result in a maximum revenue generation for the wind farm.

The present invention further relates to the wind farm arranged accordingly.

FIG 6

Step 1000, divide the wind direction into sectors 210 for site data positions 200

Step 1010, for each site data position 200, use historical data to determine a frequency of occurence of the wind direction for each sector 210

Step 1020, for each site data position and secion 210, historical data is used to determine the anual wind speed distribution at hub height

Step 1030, for each site data position and sector 200, use a forecast model to determine a function relating wind speed to the average value of electricity - the value function- optionally normalized

Step 1040, obtain information on the wind turbine model to be used.

Step 1050, create an initial layout for the site comprised of an initial estimate of wind turbine positions that collectively result in a maximum revenue generation for the wind farm.

Step 1060, determine at each wind turbine position the sector 210 frequencies, wind speed distribution, and value function.

Step 1070, for each wind turbine position determine at each sector 210 the wake losses as a function of wind speed.

Step 1080, for each wind turbine position, determine at each sector 210 the normalized revenue that can be obtained by combining the sector 210 frequency, wind speed frequency, wake losses, Power Curve 140, and normalized value function for that position.

Step 1090, perform the same calculation for all turbines in the layout to determine the normalized overall revenue for the site.

Step 1100, perform multiple optimization cycles of the layout by adjusting the wind turbine positions and recalculating the normalized overall revenue.

EP 4 498 297 A1

**Description**

FIELD OF THE INVENTION

The invention relates to a method to define a spatial arrangement of wind turbines in a wind farm and to the wind farm arranged accordingly.

BACKGROUND OF THE INVENTION

The recent history of progress in the wind industry has in some regions involved the preference for wind turbine models that have a lower specific power density. This has led to turbines with larger rotors relative to their power rating. The driving force behind this development is in part to maximize capacity factors for wind farms and provide greater reliability of supply, but also the relatively high value of electricity in conditions where wind speeds are low.

Similarly, in areas of generally high wind speeds the price value of electricity usually will be relatively low since the wind turbines much of the time is at least capable of operating at their maximum rated power.

Taking this trend over to the design of wind farm layouts, it would then also seem appropriate to optimize the layout of a wind farm to consider the value of the energy produced as opposed to only the energy itself.

Without a procurement arrangement, such as a Power Purchase Agreement (PPA) or Contract for Difference (CfD) that attributes a fixed value to a unit of energy (e.g. kWh), a trend is showing that the value of a kWh of electricity generated by a wind turbine at high wind generally has less value than a kWh of electricity generated at low wind.

This thus may risk reducing the income of installed wind farms and may lead to less willingness for further investments and installation of further wind turbines.

The present invention aims to overcome such drawbacks.

SUMMARY OF THE INVENTION

The object of the invention is achieved by the independent claims. The dependent claims describe advantageous developments and modifications of the invention.

In accordance with the invention there is provided a method to define a spatial arrangement of wind turbines in a wind farm at least including a revenue parameter based on a value function being a forecast of the relationship between electricity prices and wind speeds, the method including

- a step to define one or multiple site data positions at the wind farm,
- a step, for each site data position, use a forecast model to determine the value function relating wind speed to an electricity value; and
- a step to optimize the layout by adjusting the wind turbine positions and recalculating the overall revenue in order to obtain the wind turbine positions that collectively result in a maximum revenue generation for the wind farm.

In one embodiment the step to define one or multiple site data positions at the wind farm further includes to divide the wind direction into sectors for each of the data positions, and for each site data position and sector, to use a forecast model to determine the value function relating wind speed to the average value of electricity.

The method may further include;

- a step, for each site data position, to use historical data to determine a frequency of occurrence of the wind direction for each sector,
- a step, for each site data position and section, to use historical data to determine the annual wind speed distribution at hub height.
- a step, for each site data position and sector, to use a forecast model to determine the value function relating wind speed to the average value of electricity, this optionally could include performing multiple optimization cycles of the layout by adjusting the wind turbine positions and recalculating the overall revenue in order to obtain the wind turbine positions that collectively result in a maximum revenue generation for the wind farm.

The method may further include a step to obtain information on the wind turbine model to be used including a Power Curve, which relates the power produced by the wind turbine to the wind speed and a Thrust Curve, which is used to determine the downstream wake losses as a function of wind speed.

The method may further include a step to create an initial layout for the site comprised of an initial estimate of wind turbine positions that collectively result in a maximum revenue generation for the wind farm.

The method may further include a step of determining at each wind turbine position the sector frequencies, wind speed distribution, and value function.

The frequencies, wind speed distribution, and value function are determined at each wind turbine position by interpolating spatially between the respective data available at one or multiple site data positions.

The method may further include a step, for each wind turbine position, determine at each sector the wake losses as a function of wind speed.

The method may further include a step, for each wind turbine position, to determine at each sector the normalized revenue that can be obtained by combining the sector frequency, wind speed frequency, wake losses, Power Curve, and value function for that position, possibly normalized.

The method may include a step of performing the same calculation for all turbines in the layout to determine the normalized overall revenue for the site.

In one embodiment the method includes a step, where based on historical data, a value function is determined for each site data position and sector.

The method according may include a step, wherein for each site data position and sector, the value function is combined with the power curve of a wind turbine model to establish a value curve.

The method may include a step of performing a siting optimization with existing optimization tools utilizing the interpolated value curves for each wind turbine position and sector to optimize for revenue.

The present invention further may relate to a method to define a spatial arrangement of wind turbines in a wind farm, wherein at least some of the wind turbines in the wind farm are floating offshore wind turbines, wherein the method includes a step to utilize the method according to any of the preceding embodiments to establish a layout for the floating offshore wind turbines that is optimized for revenue over a target forecast period.

The method may further include a step, where during the operational life of the wind farm, to repeat the revenue-based siting optimization using more accurate and updated forecasting models for electricity price relative to wind conditions.

The method may further include a step, when the optimization shows that the Net Present Value (NPV) of the gain in revenue is greater than the cost of rearranging the layout of the site, the positions of the individual turbines are then rearranged to take advantage of the higher revenue opportunity.

The present invention may further relate to a wind farm spatial arrangement of wind turbines arranged according to the method of any of the preceding embodiments.

BRIEF DESCRIPTION OF THE DRAWINGS

Embodiments of the invention are now described, by way of example only, with reference to the accompanying drawings, of which:

Figure 1          shows average forecasted electricity price as a function of wind speed;

Figure 2          shows a Power Curve and Value Curve to forecast electricity price relationship to wind speed;

Figure 3          shows a wind farm including multiple data site positions, and multiple wind turbines each having a wind turbine position

Figure 4          shows the frequency distribution Power Curve and Value Curve

Figure 5          shows aggregate direction of highest energy and value based on Power Curve and Value curve

Figure 6          shows a flow chart according to a first example method of the present invention

Figure 7          shows wind direction distribution sectors;

Figure 8          shows example dataset for each wind turbine position

Figure 9          shows a flow chart according to a second example method of the present invention

Figure 10         shows a flow chart according to a third example method of the present invention

Figures 11A, 11B    shows an example siting layout optimized for energy yield and example siting layout optimized for value respectively

The illustration in the drawings is in schematic form. It is noted that in different figures, similar or identical elements may be provided with the same reference signs.

DESCRIPTION OF THE DRAWINGS

The electric power produced by a wind turbine is related to the wind speed, a higher wind means a higher (potential) power output. This applies until a maximum power output due to either the wind turbine possible maximum power output, or due to curtailment.

In high-wind periods, the wind speed has an increasing effect on the value of electricity at any given point in time. At high wind, grid congestion and/or supply which exceeds demand can result in lower electricity pricing. At low wind, a shortfall of available power can result in provision of more expensive peaking plants or discharge of energy storage resulting in higher pricing.

Other sources of electrical power generation also add to the price such as photovoltage systems depending on e.g. the sun intensity.

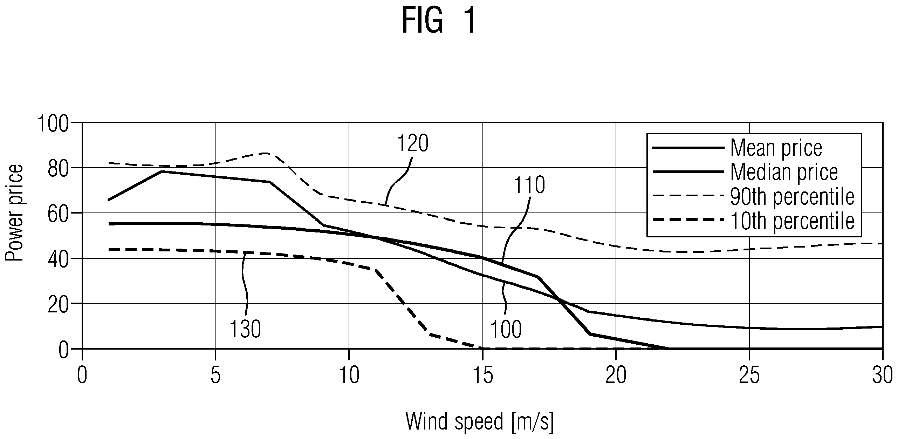

The wholesale price of electricity in areas with high wind energy penetration is therefore forecast to show a negative correlation with wind speed. See an example in figure 1 of forecasted prices as a function of wind speed taken over an entire year. The figure illustrates respectively the mean price 100, median price 110, 90th percentile 120 and 10th percentile 130 forecasts.

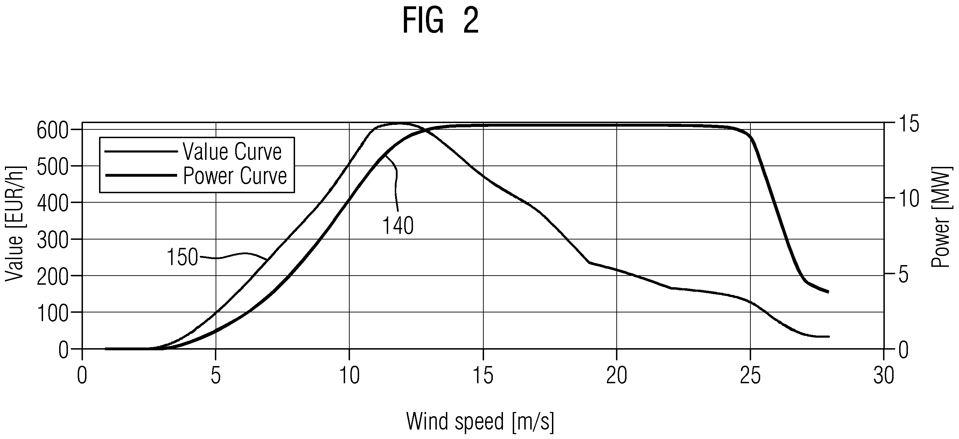

A further example is shown in figure 2 for the same forecast as figure 1. The power curve 140 relates the maximal power the wind turbine may produce to the available wind speed at hub height with a standardized level of turbulence, wind shear and air density. By multiplying the power curve 140 with the mean price 100 values shown in figure 1, a value curve 150 is obtained relating the revenue that is generated in a duration of time to the wind speed for the given turbine model.

It can be seen from the value curve 150 the forecasted revenue generated at 7 m/s wind speeds on average will be like the revenue at 20 m/s. This can be contrasted with the energy yield of the turbine, where at 20 m/s the turbine produces roughly 4 times as much power than at 7 m/s.

Over a longer period of time, e.g. a year, the prevailing wind directions and the average wind speeds may differ as may the values, but the changes in the values, or prices, may not follow the changes in wind directions and wind speeds.

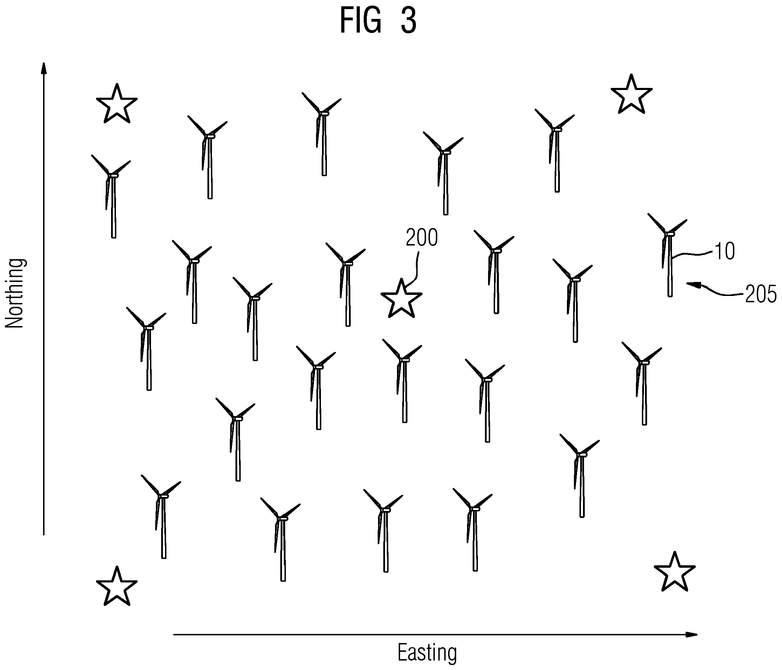

Figure 3 illustrates a wind farm including multiple data positions 200, and multiple wind turbines 10 each having a wind turbine position 205-

For wind farms, the site data positions 200 are typically fixed prior to commencement of the siting layout optimization. The site data positions 200 might correspond with metrological measurement points, floating lidars, or other positions used during site survey activities to determine metocean conditions.

Wind turbine positions 205, on the other hand, are the outcome of the siting layout optimization and refer to the actual positions of the wind turbines themselves.

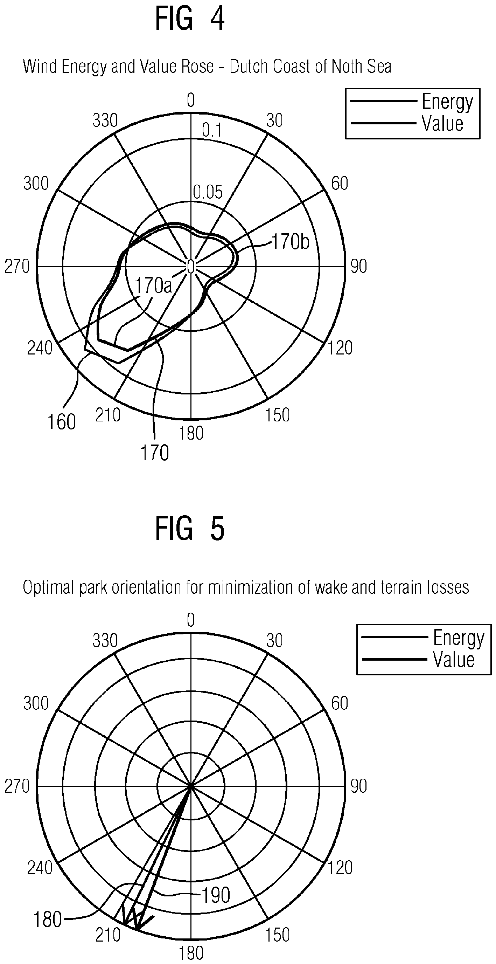

Figure 4 illustrates an example of some wind directions 160 prevailing over others, and how the relative value 170 differs relative to the overall production in dependence to the wind direction 160 (e.g. seen relative to a wind turbine position 205 or data site position 200). In some directions there are relative lower value 170a and higher value 170b in others compared relative to overall energy production 160.

Figure 5 illustrates a resulting optimal aggregate orientation 190 of an example wind farm shifted by 5° to the South to optimize for value rather than just energy as illustrated by arrow 180. This is not an extreme reorientation, but with annual revenue generation even small amounts of improvement can have large monetary values over wind farms lifetime. This will be explained in more details.

Optimization of the spatial layout of a wind farm, also just called siting, is typically done to maximize energy yield given constraints of the available area (land or sea). This optimization involves identifying areas with the lowest cost and impact due to, among other factors, wind turbine loading, soil conditions, suitable access by installation and maintenance equipment, proximity to conflicting uses, population centers, or cultural resources, and impact on wildlife. This is then balanced against the locations of the wind turbines that allow for the highest annual energy production (AEP), corresponding to the arrow 180 of figure 5.

Optimizing for AEP involves taking into consideration the surrounding terrain, obstructions, and wake effects of neighboring turbines. Due to these wake effects, the spatial arrangement of wind turbines is often oriented such that the dominant wind directions associated with the highest proportion of AEP result in lower wake losses.

However, a spatial arrangement of wind turbines optimized for maximum AEP may not necessarily be optimized for maximum monetary revenue (corresponding to arrow 190 of figure 5), since the predominant direction of the wind while wind speeds are lower (and therefore more valuable per kWh) may be different than the predominant direction at higher wind speeds. Optimizing a site layout to maximize the value of energy produced, referred to here as revenue-based siting, could be preferential than simply optimizing for energy produced.

A method is described below for performing a revenue-based siting. A key element of these methods is the capability to obtain a reliable forecast of the relationship between electricity prices and wind speeds (and preferably wind direction). The precise value of electricity over the life of the wind farm is less important than the general relationship of normalized pricing and wind conditions. The object is to find the optimal layout that maximizes revenue relative to other layouts.

A forecast of the relationship between wind speed, wind direction and electricity pricing can be obtained by estimating the build out and technology mix of generation, storage, and transmission infrastructure contrasting this with the development balancing mechanisms and load patterns relating to social trends and economic growth. Such forecasts are already available in the energy industry.

A value function, relating electricity price to wind direction and wind speed, is a way of communicating the outcome of the forecasting model. The value function can represent a given snapshot in time, for example the annual average for the year 2030, or it can comprise the value over a long duration by discounting the future value of money using Net Present Value (NPV) techniques.

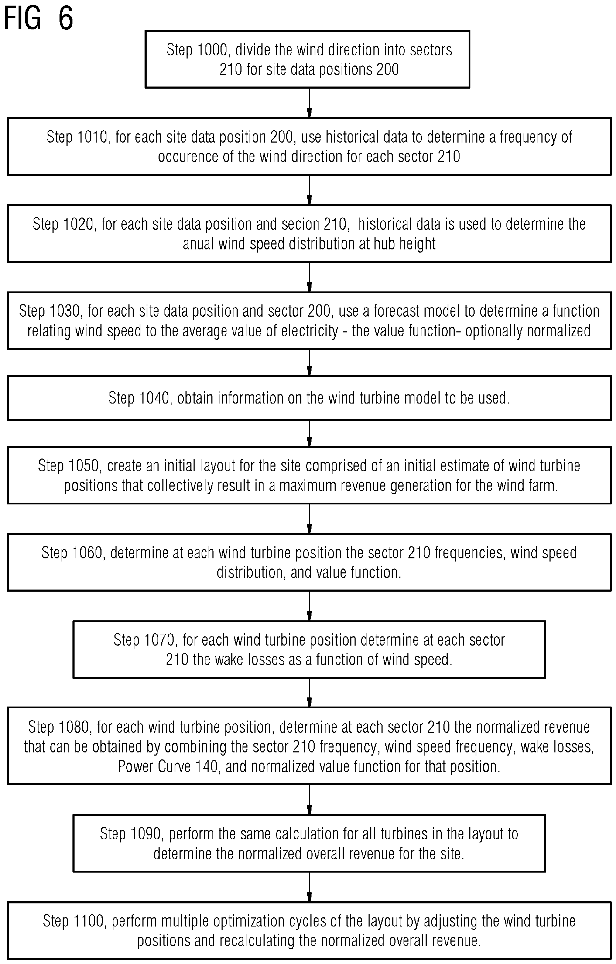

Example method 1 - sector method - is illustrated the flow chart in figure 6.

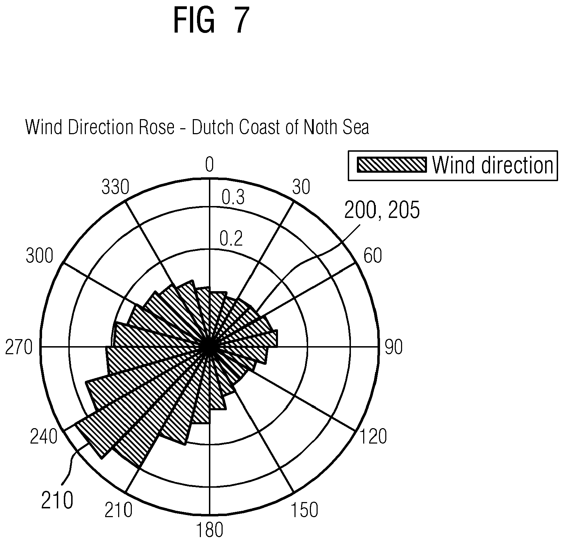

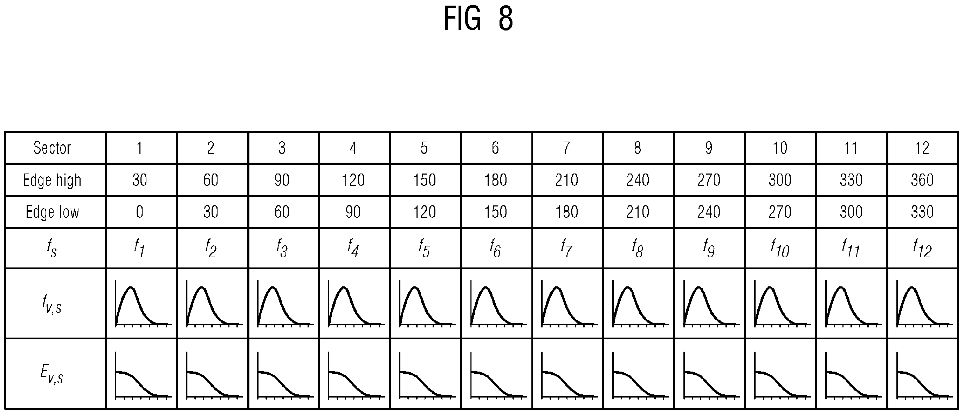

In a step 1000, for one or multiple site data positions 200 at a wind farm, divide the wind direction into sectors 210, as seen in figure 7. A sector 210 is the term used for a wind direction range as part of the overall compass rose. Each sector 210 represents an angle, or arch, section of the full circle around the respective data position 200, the aggregated sectors 210 representing the full circle. For example, wind coming from between 155° and 160° Southwest would be considered a sector where the sector spans 5°. In the table of figure 8 the sectors 210 spans 30° and is represented by respectively the Edge high and Edge low. The term $f_s$ is the annual frequency of occurrence of an individual sector, s being the respective sectors 210 represented to a natural number 1-12. The term $f_{v,s}$ is the annual frequency of occurrence of a wind speed within the respective sector. $E_{v,s}$ is the value function at a given wind speed and sector, where the value function may be normalized.

In a step 1010, for each site data position 200, use historical data to determine a frequency of occurrence of the wind direction for each sector 210. (This, in effect, creates a wind direction distribution for the site data position 200, where each sector 210 is one bin of the distribution)

In a step 1020, for each site data position 200 and section 210, historical data is used to determine the annual wind speed distribution at hub height. The distribution of annual wind speeds is typically described using a two-parameter Weibull distribution which gives information on the relative frequency of the wind speed. Irrelevant of which distribution is used, it should account for the characteristics of the site including the terrain and any obstacles (e.g. forests) that might affect the wind flow.

In a step 1030, for each site data position 200 and sector 210, use a forecast model to determine a function relating wind speed to the normalized average value of electricity - the value function. This function would be similar what is shown by the mean value 100 line in Figure 1 but normalized. Normalization is used to decouple the function from the fluctuating year-to-year price of electricity. This value function may represent a fixed period in time (e.g. the year 2030), or a duration of time (e.g. a year, decade or the life of the wind farm) where future values are weighted and included using Net Present Value (NPV) techniques.

In a step 1040, obtain information on the wind turbine model to be used. This includes a Power Curve 140, which relates the power produced by the wind turbine to the wind speed and a Thrust Curve, which is used to determine the downstream wake losses as a function of wind speed.

In a step 1050, create an initial layout for the site comprised of an initial estimate of wind turbine positions that collectively result in a maximum revenue generation for the wind farm.

In a step 1060, determine at each wind turbine position 205 sector 210 frequencies wind speed distribution, and value function (or value curve 150). These may be determined at each wind turbine position 205 by interpolating spatially between the respective data available at one or multiple site data positions. The outcome of this would be a set of data for each wind turbine position as shown in figure 7 as an example.

In a step 1070, for each wind turbine position 205 , determine at each sector 210 the wake losses as a function of wind speed. The wake losses (which are manifested by a decrease in the available wind speed) depend upon the one or more wind turbines which are upwind of the wind turbine position and a wake loss model for determining the downstream losses and the combination of losses from multiple turbines.

In a step 1080, for each wind turbine position, determine at each sector 210 the normalized revenue that can be obtained by combining the sector 210 frequency, wind speed frequency, wake losses, Power Curve 140, and normalized value function for that position. A formula for the annual revenue at a wind turbine position is given by:

$$H_{year} \sum_{s=1}^{s_{max}} \left( f_s \sum_{v=0}^{v_{max}} f_{v,s} W_{v,s} P_v E_{v,s} \right)$$

Again, the term $f_s$ is the annual frequency of occurrence of an individual sector, S being the respective sectors 210 represented to a natural number 1-12, $S_{max}$ the number of overall sectors (illustrated as 12, though any number applies). The term $f_{v,s}$ is the annual frequency of occurrence of a wind speed within the respective sector. $E_{v,s}$ is the normalized value function at a given wind speed and sector. H is the number of hours per year, V is the windspeed unaffected by wake losses, $V_{max}$ is the highest windspeed in the wind speed distribution data set, $W_{v,s}$ is the wake losses as a percentage and $P_v$ is the power produced by the turbine at a given wind speed.

The result of this calculation is the value/year or annual revenue produced by an individual turbine.

In a step 1090, perform the same calculation for all turbines in the layout to determine the normalized overall revenue for the site.

In a step 1100, perform multiple optimization cycles of the layout by adjusting the wind turbine positions and recalculating the normalized overall revenue. The optimization shall use the normalized overall revenue as the optimization target weighted against other spatial constraints and costs.

This optimization can be done in multiple different manners. In one embodiment it involves interpolating the value at individual wind turbine positions to make a field of values and then adjusting the individual wind turbine positions a small amount along the gradients of this field. After adjusting the wind turbine positions, the steps 1060 to 1090 are repeated to determine the new overall normalized revenue. This process is repeated until the improvement in revenue between subsequent iterations is marginal (i.e. below a minimum threshold). This optimization is then stress-tested by repeating the same process with different initial layouts until confidence in the optimal arrangement is established.

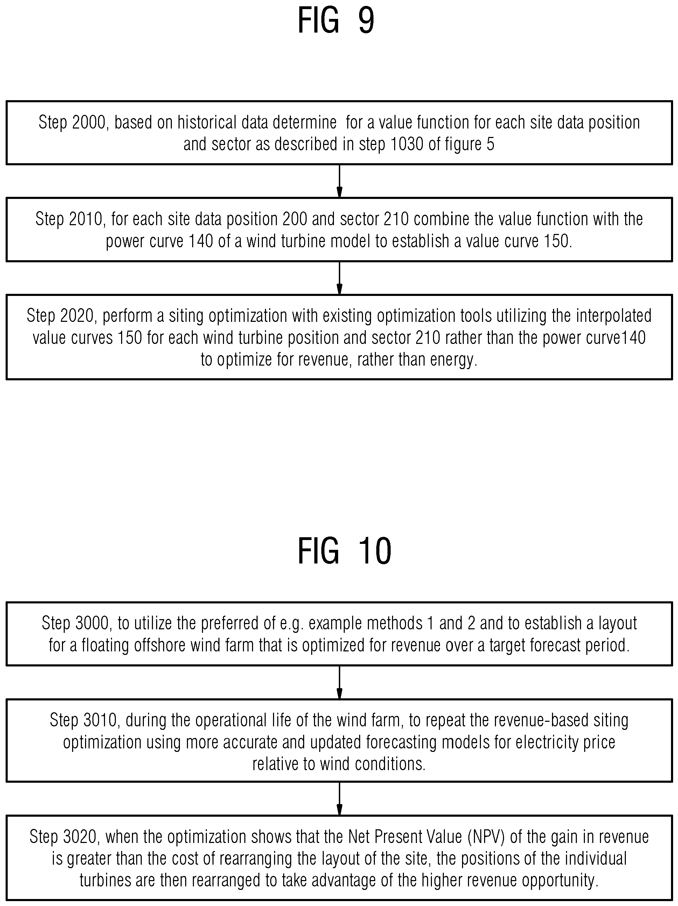

Example method 2 - value curve method - is illustrated by the flow chart in figure 9.

This includes a step 2000, based on historical data determine a value function for each site data position and sector 210 as described in fourth step (1030) of example method 2. This example may thus further include steps 1000 to 1020 replacing step 1030 with step 2000.

In a further step 2010, for each site data position 200 and sector 210 combine the value function with the power curve 140 of a wind turbine model to establish a value curve 150. This is done by simple multiplication:

```
Value [value/hour] = Power [kW] x Price [value/kWh]
```

In a further step 2020, perform a siting optimization with existing optimization tools utilizing the interpolated value curves 150 for each wind turbine position and the respective sectors 210 rather than the power curve 140 to optimize for revenue, rather than energy. Note that the original thrust curve would still be used for estimates of downstream losses.

The steps 2010 and/or 2020 themselves, or steps in-between or thereafter, may include steps like example 1 steps 1040-1100 only using the value function of step 2010 rather than the value function generated in step 1030.

Example method 3 - floating offshore wind and price-sensitive layout adjustments - is illustrated by the flow chart in figure 10.

Regardless of the accuracy of a forecast model, the electricity value and its relationship to wind conditions will vary with time. Floating offshore wind projects will have the ability to relocate the individual positions 205 of wind turbines at a lower relative cost than with fixed-bottom wind farms.

By taking advantage of the relative mobility of floating wind turbines, the layout can be adjusted during the operational life of the wind farm as the economic conditions and technology mix in the energy sector change in time.

An embodiment method which takes advantage of this could include the following steps:
A step 3000 to utilize the preferred of e.g. example methods 1 and 2 to establish a layout for the floating offshore wind farm that is optimized for revenue over a target forecast period. This forecast period could as example be 5 years from the installation date, if there is an expectation that the site can be reconfigured within that 5 years to adjust for changes in the electricity price forecast in that time.

A step 3010 where during the operational life of the wind farm, to repeat the revenue-based siting optimization using more accurate and updated forecasting models for electricity price relative to wind conditions.

A step 3020, when the optimization shows that the Net Present Value (NPV) of the gain in revenue is greater than the cost of rearranging the layout of the site, the positions of the individual turbines are then rearranged to take advantage of the higher revenue opportunity.

This method would involve additional considerations in the layout costs. For example, the extent to which the turbine positions may be adjusted could be constrained by the inter-array cabling and mooring solutions that are in use. Similarly, changes in turbine loading, remaining useful life, and impacts on site permitting would be necessary to consider in any spatial rearrangement.

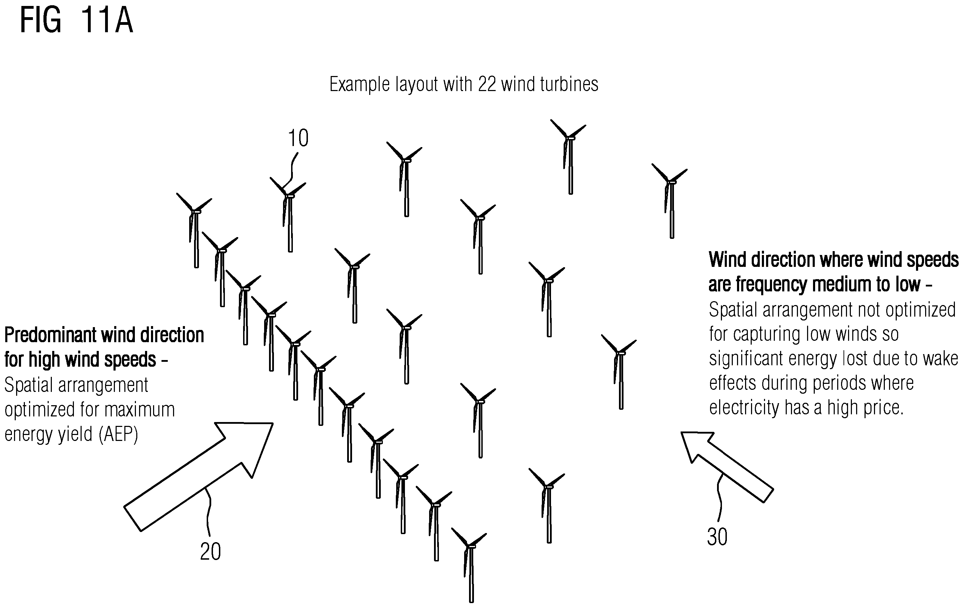

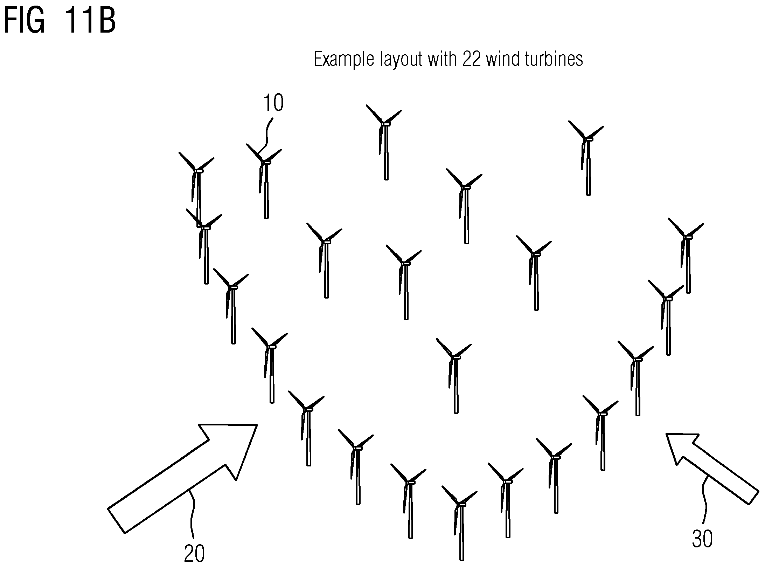

Figures 11A and 11B illustrates an example of alternative siting arrangements of wind turbines 10 according an embodiment of the present invention for energy optimization as in figure 11A compared to value optimization illustrated in figure 11B.

The figures illustrate an example with 22 wind turbines and where Southwest is the predominant wind direction 20 when wind speeds are highest. High wind speeds contain a larger share of energy, as the power in the wind scales by the cube of the wind speed as given by the formula

$$P_{wind} = 0.5\rho A v^3$$

Where:

$P_{wind}$ is power in the undisturbed wind stream, $\rho$ is the average air density, A is the cross-sectional area of the wind stream, and v is the velocity of the wind.

The arrow 30 illustrates a wind direction where wind speeds are frequently medium to low.

To maximize annual energy production, the site in Figure 10A is oriented to minimize wake effects from the direction with the predominant high wind speed direction 20 by forming a first row of tightly packed wind turbines 10 being the first to face the wind in the wind direction 20. Downstream wind turbines 10 seen in the wind direction 20 is less dense positioned, meaning with larger in-between distances. For the direction 30 a smaller fraction of power will be extracted from the wind in the direction 30 compared to 20. However, it may be for lower wind speeds from the direction 30 correlate to periods where electricity prices are forecast to be high.

In Figure 11B, a layout is shown which uses revenue-based siting. Here, the site is arranged in a suboptimal arrangement for AEP but arranges the wind turbines 10 so that less wake losses occur during periods with low wind speeds. In doing so, the arrangement optimizes for revenue generation over the lifetime of the wind farm, rather than just the quantity of energy produced. In the illustrated embodiment part of the wind turbines 10 from front line relative to the wind direction 20 is moved and included into the row of wind turbines 10 first encountering the wind from the direction 30.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

**Claims**

1. Method to define a spatial arrangement of wind turbines (10) in a wind farm at least including a revenue parameter based on a value function being a forecast of the relationship between electricity prices and wind speeds, the method including

   - a step to determine at each wind turbine position 205 a forecast of the overall revenue to be generated
   - a step (1100, 2020) to optimize the layout by adjusting the wind turbine positions (205) and recalculating the overall revenue to obtain the wind turbine positions that collectively result in a maximum revenue generation for the wind farm.

2. Method according to claim 1, wherein the method further includes a step (1000) to define one or multiple site data positions (200) at the wind farm further includes to divide the wind direction into sectors (210) for each of the data positions (200), and

   - a step (1010), for each site data position (200), use historical data to determine a frequency of occurrence of the wind direction for each sector (210), and/or
   - a step (1020), for each site data position (200) and section (210), use historical data to determine the annual wind speed distribution at hub height.

3. Method according to claim 1 or 2, wherein the method further includes a step (1030), for each site data position (200) and sector (210), use a forecast model to determine the value function relating wind speed to the average value of electricity.

4. Method according to claim 1, 2 or 3, including a step (1040) to obtain information on the wind turbine model to be used including a Power Curve (140), which relates the power produced by the wind turbine to the wind speed and a Thrust Curve, which is used to determine the downstream wake losses as a function of wind speed.

5. Method according to claim 1, 2, 3 or 4 including a step (1050) to create an initial layout for the site comprised of an initial estimate of wind turbine positions that collectively result in a maximum revenue generation for the wind farm.

6.  Method according to any of the preceding claims, including a step (1060) of determining at each wind turbine position the sector (210) frequencies, wind speed distribution, and value function.

7.  Method according to any of the preceding claims, including a step (1070), for each wind turbine position, determine at each sector (210) the wake losses as a function of wind speed.

8.  Method according to any of the preceding claims, including a step (1080), for each wind turbine position, to determine at each sector (210) the normalized revenue that can be obtained by combining the sector (210) frequency, wind speed frequency, wake losses, Power Curve (140), and normalized value function for that position.

9.  Method according to claim 8, including a step (1090) of performing the same calculation for all turbines in the layout to determine the normalized overall revenue for the site.

10. Method according to any of the preceding claims, wherein the step (1100) includes performing multiple optimization cycles of the layout by adjusting the wind turbine positions and recalculating the overall revenue in order to obtain the wind turbine positions that collectively result in a maximum revenue generation for the wind farm.

11. Method according to claim 1 or 2, including a step (2000), where based on historical data, to determine a value function for each site data position and sector (210).

12. Method according to claim 1, 2 or 11, including a step (2010), wherein for each site data position 200 and sector (210), to combine the value function with the power curve (140) of a wind turbine model to establish a value curve (150) .

13. Method according to claim 1, 2, 11 or 12, including a step (2020) of performing a siting optimization with existing optimization tools utilizing the interpolated value curves (150) for each wind turbine position and sector (210) to optimize for revenue.

14. Method to define a spatial arrangement of wind turbines (10) in a wind farm, wherein at least some of the wind turbines (10) in the wind farm are floating offshore wind turbines (10), wherein the method includes a step (3000) to utilize the method according to any of the preceding claims to establish a layout for the floating offshore wind turbines (10) that is optimized for revenue over a target forecast period.

15. Method according to claim 14, including a step (3010), where during the operational life of the wind farm, to repeat the revenue-based siting optimization using more accurate and updated forecasting models for electricity price relative to wind conditions.

16. Method according to claim 14 or 15, including a step 3020, when the optimization shows that the Net Present Value (NPV) of the gain in revenue is greater than the cost of rearranging the layout of the site, the positions of the individual turbines are then rearranged to take advantage of the higher revenue opportunity.

17. A wind farm spatial arrangement of wind turbines (10) arranged according to the method of any of the preceding claims.

# FIG 1

FIG 2

EP 4 498 297 A1

FIG 3

10
205
200

Easting

Northing

# FIG 4

Wind Energy and Value Rose - Dutch Coast of Noth Sea

# FIG 5

Optimal park orientation for minimization of wake and terrain losses

# FIG 6

Step 1000, divide the wind direction into sectors 210 for site data positions 200

Step 1010, for each site data position 200, use historical data to determine a frequency of occurence of the wind direction for each sector 210

Step 1020, for each site data position and secion 210, historical data is used to determine the anual wind speed distribution at hub height

Step 1030, for each site data position and sector 200, use a forecast model to determine a function relating wind speed to the average value of electricity - the value function- optionally normalized

Step 1040, obtain information on the wind turbine model to be used.

Step 1050, create an initial layout for the site comprised of an initial estimate of wind turbine positions that collectively result in a maximum revenue generation for the wind farm.

Step 1060, determine at each wind turbine position the sector 210 frequencies, wind speed distribution, and value function.

Step 1070, for each wind turbine position determine at each sector 210 the wake losses as a function of wind speed.

Step 1080, for each wind turbine position, determine at each sector 210 the normalized revenue that can be obtained by combining the sector 210 frequency, wind speed frequency, wake losses, Power Curve 140, and normalized value function for that position.

Step 1090, perform the same calculation for all turbines in the layout to determine the normalized overall revenue for the site.

Step 1100, perform multiple optimization cycles of the layout by adjusting the wind turbine positions and recalculating the normalized overall revenue.

# FIG 7

Wind Direction Rose - Dutch Coast of Noth Sea

FIG 8

| Sector | 1 | 2 | 3 | 4 | 5 | 6 | 7 | 8 | 9 | 10 | 11 | 12 |
|---|---|---|---|---|---|---|---|---|---|---|---|---|
| Edge high | 30 | 60 | 90 | 120 | 150 | 180 | 210 | 240 | 270 | 300 | 330 | 360 |
| Edge low | 0 | 30 | 60 | 90 | 120 | 150 | 180 | 210 | 240 | 270 | 300 | 330 |
| $f_s$ | $f_1$ | $f_2$ | $f_3$ | $f_4$ | $f_5$ | $f_6$ | $f_7$ | $f_8$ | $f_9$ | $f_{10}$ | $f_{11}$ | $f_{12}$ |
| $f_{v,s}$ | | | | | | | | | | | | |
| $E_{v,s}$ | | | | | | | | | | | | |

EP 4 498 297 A1

# FIG 9

Step 2000, based on historical data determine for a value function for each site data position and sector as described in step 1030 of figure 5

↓

Step 2010, for each site data position 200 and sector 210 combine the value function with the power curve 140 of a wind turbine model to establish a value curve 150.

↓

Step 2020, perform a siting optimization with existing optimization tools utilizing the interpolated value curves 150 for each wind turbine position and sector 210 rather than the power curve140 to optimize for revenue, rather than energy.

# FIG 10

Step 3000, to utilize the preferred of e.g. example methods 1 and 2 and to establish a layout for a floating offshore wind farm that is optimized for revenue over a target forecast period.

↓

Step 3010, during the operational life of the wind farm, to repeat the revenue-based siting optimization using more accurate and updated forecasting models for electricity price relative to wind conditions.

↓

Step 3020, when the optimization shows that the Net Present Value (NPV) of the gain in revenue is greater than the cost of rearranging the layout of the site, the positions of the individual turbines are then rearranged to take advantage of the higher revenue opportunity.

# FIG 11A

Example layout with 22 wind turbines

**Predominant wind direction for high wind speeds –** Spatial arrangement optimized for maximum energy yield (AEP)

20

**Wind direction where wind speeds are frequency medium to low –** Spatial arrangement not optimized for capturing low winds so significant energy lost due to wake effects during periods where electricity has a high price.

30

EP 4 498 297 A1

FIG 11B

Example layout with 22 wind turbines

**European Patent Office**

Europäisches Patentamt
European Patent Office
Office européen des brevets

# EUROPEAN SEARCH REPORT

**Application Number**

EP 23 18 7428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | POOKPUNT SITTICHOKE ET AL: "Design of optimal wind farm configuration using a binary particle swarm optimization at Huasai district, Southern Thailand", ENERGY CONVERSION AND MANAGEMENT, ELSEVIER SCIENCE PUBLISHERS, OXFORD, GB, vol. 108, 18 November 2015 (2015-11-18), pages 160-180, XP029352608, ISSN: 0196-8904, DOI: 10.1016/J.ENCONMAN.2015.11.002 | 1-5,7, 10-17 | INV. G06Q10/04 G06Q10/063 G06Q50/06 |
| Y | * the whole document * | 6,8,9 | |
| X | TROVATO VINCENZO ET AL: "Economic and financial benefits for wind turbines providing frequency response exploiting the kinetic energy or operating part-loaded", IET GENERATION, TRANSMISSION&DISTRIBUTION, IET, UK, vol. 14, no. 20, 16 October 2020 (2020-10-16), pages 4371-4387, XP006092432, ISSN: 1751-8687, DOI: 10.1049/IET-GTD.2020.0010 | 1-17 | |
| Y | * the whole document * | 6,8,9 | |

**TECHNICAL FIELDS SEARCHED (IPC)**

G06Q

The present search report has been drawn up for all claims

| Place of search | Date of completion of the search | Examiner |
|---|---|---|
| Munich | 21 December 2023 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)